# EUROPÄISCHE PATENTSCHRIFT

(11) **EP 4 425 147 B1**
(45) Veröffentlichungstag und Bekanntmachung des Hinweises auf die Patenterteilung: **23.07.2025**
(21) Anmeldenummer: 24157978.8
(22) Anmeldetag: 15.02.2024
(51) Int. Cl.: G01N 15/06

(54) **VERFAHREN UND VORRICHTUNG ZUR MESSUNG DER KONZENTRATION VON LICHT ABSORBIERENDEN PARTIKELN**
METHOD AND DEVICE FOR MEASURING THE CONCENTRATION OF LIGHT ABSORBING PARTICLES
PROCÉDÉ ET APPAREIL DE MESURE DE LA CONCENTRATION DE PARTICULES ABSORBANT LA LUMIÈRE

(30) Priorität: 20.02.2023 DE 102023104116
(43) Veröffentlichungstag der Anmeldung: 04.09.2024
(73) Patentinhaber: Dr. Födisch Umweltmesstechnik AG, 04420 Markranstädt (DE)
(72) Erfinder: Leidenberger, Patrik, 04420 Markranstädt (DE); Schulz, Jörg, 04420 Markranstädt (DE)
(74) Vertreter: Hecht, Jan-David

(56) Entgegenhaltungen:
- EP-A1- 3 502 658
- US-A- 3 700 330

## Beschreibung

Die vorliegende Erfindung betrifft ein Verfahren zur Messung der Konzentration von Licht absorbierenden Partikeln nach dem Oberbegriff von Anspruch 1 und eine Vorrichtung zur Messung der Konzentration von Licht absorbierenden Partikeln nach dem Oberbegriff von Anspruch 10.

Zur Messung von Partikeln, insbesondere von Staubpartikeln, und deren Konzentration in Luft oder anderen Medien wird häufig Licht verwendet. Dabei gibt es Licht streuende Partikel und Licht absorbierende Partikel, wobei beispielsweise sogenanntes "Black Carbon" zu den Licht absorbierenden Partikeln zählt.

Für die Messung der Konzentration Licht absorbierender Partikel wird in der Regel ein zu untersuchendes Aerosol (beispielsweise mit den Partikeln versehene Luft) durch ein Filtermaterial gesaugt (Konzentrationsmessweg), die Partikel werden im Filtermaterial abgeschieden und verändern dadurch die Lichtabsorption des Filtermaterials. Solche Vorrichtungen werden auch "Aethalometer" genannt.

Diese Lichtabsorption wird mittels einer Lichtquelle auf der einen und eines Photodetektors auf der anderen Seite des Filtermaterials gemessen. Die Abnahme der Lichtintensität ist ein Wert, mit dem die Partikel-Konzentration des Aerosols (Messluft) berechnet werden kann (typische Konzentration in Umgebungsluft für Black Carbon im Bereich ng/m³; für Feinstaub im Bereich µg/m³).

Die Änderung der Absorption des Lichts steht dabei in direkter Abhängigkeit zur Intensität der Lichtquelle. Bei einigen Aethalometern wird eine Erhöhung der Messgenauigkeit dadurch erreicht, dass das Aerosol gefiltert und über einen zweiten Messweg (Referenzmessweg) über das gleiche Filtermaterial an einer anderen Position geleitet wird. Als Messwert wird dann die Differenz zwischen Konzentrationsmessweg und Referenzmessweg verwendet. Dies führt zu einer Stabilitätsverbesserung für Langzeit- und Kurzzeitmessung, da eine Reduktion von Querempfindlichkeiten, insb. Einfluss von Feuchtigkeit auf den Filter erzielt Eine derartige Vorrichtung ist aus der Druckschrift EP 3 502 658 A1 bekannt.

Es ist Aufgabe der vorliegenden Erfindung, die Genauigkeit dieser Konzentrationsbestimmung noch weiter zu erhöhen.

Diese Aufgabe wird gelöst mit dem erfindungsgemäßen Verfahren nach Anspruch 1 und der erfindungsgemäßen Vorrichtung nach Anspruch 10. Vorteilhafte Weiterbildungen sind in den abhängigen Ansprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn für den Konzentrationsmessweg und den Referenzmessweg jeweils derselbe Photodetektor eingesetzt wird. Dadurch werden Messdifferenzen zwischen den beiden Photodetektoren reduziert, wodurch die Messgenauigkeit erhöht wird, da dadurch der Einfluss der Drift der Detektoren reduziert wird.

Das erfindungsgemäße Verfahren zur Messung der Konzentration von Licht absorbierenden Partikeln in einem mit den Licht absorbierenden Partikeln beladenen Medium, wobei im Rahmen einer Konzentrationsmessung die Transmission von Licht durch Filtermaterial, das mit Licht absorbierenden Partikeln beladenen wurde, gemessen wird, wobei im Rahmen einer Referenzmessung die Transmission von Licht durch Filtermaterial, das nicht mit Licht absorbierenden Partikeln beladen wurde, gemessen wird, wobei die Konzentrationsmessung mit der Referenzmessung normiert wird, dadurch gekennzeichnet, dass zur Messung des transmittierten Lichts ein Lichtdetektor verwendet wird, der abwechselnd die Konzentrationsmessung und die Referenzmessung durchführt. Durch eine Messung des Volumens des Mediums kann dann in üblicher Art und Weise die Konzentration der Licht absorbierenden Partikel bestimmt werden.

In einer vorteilhaften Weiterbildung ist vorgesehen, dass das Medium, das mit den Licht absorbierenden Partikeln beladen ist, durch das zu beladende Filtermaterial geführt wird, wobei das Medium im Anschluss durch das nicht zu beladende Filtermaterial geführt wird, wobei für die Konzentrationsmessung und die Referenzmessung dieselbe Lichtquelle verwendet wird, wobei abwechselnd der Lichtweg zwischen der Lichtquelle und dem Lichtdetektor über das beladene Filtermaterial und das unbeladene Filtermaterial geschaltet wird. Dadurch wird das mit den Licht absorbierenden Partikeln beladene Medium nacheinander an zwei verschiedenen Stellen durch Filtermaterial geführt, wobei es sich bevorzugt um das gleiche Filtermaterial, insbesondere um unterschiedliche Bereich desselben Filtermaterials handelt. Dabei werden die Licht absorbierenden Partikel an der ersten Stelle, an der das mit den Licht absorbierenden Partikeln beladene Medium durch das Filtermaterial geführt wird, abgeschieden, bevorzugt vollständig abgeschieden. An der zweiten Stelle, an der das Medium anschließend durch das Filtermaterial geführt wird, gibt das Medium nur noch proportional zur ersten Stelle Feuchtigkeit ab. Während dieses Prozesses wird kontinuierlich und abwechselnd an beiden Stellen die Lichtdämpfung bei einer geeigneten Wellenlänge gemessen. Der Messwert an der zweiten Stelle wird als Referenz genutzt. Mit diesem Referenzwert werden Variationen des Filtermaterials und der Feuchtigkeit bei der kontinuierlichen Messung der Lichtdämpfung korrigiert.

In einer vorteilhaften Weiterbildung ist vorgesehen, dass ein Lichtwegeschalter für die Schaltung zwischen einem ersten Lichtweg von einer Lichtquelle durch mit Licht absorbierenden Partikeln beladenes Filtermaterial hin zum Lichtdetektor und einem zweiten Lichtweg von einer Lichtquelle durch nicht mit Licht absorbierenden Partikeln beladenes Filtermaterial hin zum Lichtdetektor besteht, wobei der Lichtwegeschalter des Lichtweges bevorzugt ein mechanisches und/oder ein elektrooptisches Element aufweist, wobei das Element insbesondere eine Chopperscheibe, eine Blende, ein Shutter, ein beweglicher Spiegel, ein beweglicher Polarisationsfilter oder ein elektrischer Polarisationsfilter ist. Dadurch können die Messungen an der ersten Stelle und an der zweiten Stelle sehr einfach wechselweise erfolgen.

Im Rahmen der vorliegenden Erfindung wird somit unterschieden zwischen einer ersten Stelle des Filtermaterials und einer zweiten Stelle des Filtermaterials. An der ersten Stelle des Filtermaterials wird das mit den Licht absorbierenden Partikeln beladene Medium hindurchgeführt wird. In diesem Zusammenhang besteht ein erster Medienführungsweg, der das Medium durch die erste Stelle des Filtermaterials führt. Außerdem existiert ein erster Lichtweg in Bezug auf die erste Stelle des Filtermaterials, um die Konzentrationsmessung durchzuführen. Der erste Lichtweg kann an der ersten Stelle durch das Filtermaterial gehen (Transmissionsmessung) und/oder er kann an der ersten Stelle an dem Filtermaterial an der Seite, an der das Medium auf das Filtermaterial trifft, reflektiert werden (Reflexionsmessung). Weiterhin besteht in diesem Zusammenhang ein zweiter Medienführungsweg, der das Medium durch die zweite Stelle des Filtermaterials führt. Außerdem existiert ein zweiter Lichtweg in Bezug auf die zweite Stelle des Filtermaterials, um die Referenzmessung durchzuführen. Der zweite Lichtweg kann an der zweiten Stelle durch das Filtermaterial gehen (Transmissionsmessung) und/oder er kann an der zweiten Stelle an dem Filtermaterial an der Seite, an der das Medium auf das Filtermaterial trifft, reflektiert werden (Reflexionsmessung). Bevorzugt handelt es sich bei den Filtermaterialien um die gleichen Filtermaterialien, insbesondere um zwei unterschiedliche Stellen desselben Filtermaterials.

In einer vorteilhaften Weiterbildung ist vorgehsehen, dass der erste Medienführungsweg und der erste Lichtweg an derselben Stelle des Filtermaterials vorliegen und/oder dass zweite Medienführungsweg und der zweite Lichtweg an derselben Stelle des Filtermaterials vorliegen. Dadurch ist die Messung mit einer besonders kompakten Messvorrichtung möglich.

In einer vorteilhaften Weiterbildung ist vorgesehen, dass ein Filter mit dem zu beladenem Filtermaterial und dem nicht zu beladenem Filtermaterial besteht, wodurch die Vorrichtung sehr einfach aufgebaut ist.

In einer vorteilhaften Weiterbildung ist vorgesehen, dass der Filter wechselbar ist. Dadurch kann die Vorrichtung sehr einfach gewartet werden. Wenn die Filter in regelmäßigen Abständen gewechselt werden, ist eine kontinuierliche Messung bei einfacher Wartung möglich.

In einer vorteilhaften Weiterbildung ist vorgesehen, dass der Filter als Filterkassette ausgebildet ist, wobei die Filterkassette bevorzugt steif ausgebildet ist. Dann lässt sich die Wartung besonders einfach vornehmen. Außerdem muss das Filtermaterial selbst nicht mehr manipuliert werden, wodurch sich die Messgenauigkeit weiter erhöht, da das Filtermaterial sehr empfindlich ist.

In einer vorteilhaften Weiterbildung ist vorgesehen, dass der Filter mit einem ersten Lichtweg für das zu beladene Filtermaterial für die Konzentrationsmessung und einem zweiten Lichtweg für das nicht zu beladene Filtermaterial für die Referenzmessung ausgebildet ist. Dadurch ist die Vorrichtung sehr einfach aufgebaut.

In einer vorteilhaften Weiterbildung ist vorgesehen, dass der Filter mit einem ersten Medienführungsweg für das zu beladene Filtermaterial für die Konzentrationsmessung und einem zweiten Medienführungsweg für das nicht zu beladene Filtermaterial für die Referenzmessung ausgebildet ist. Auch dadurch ist die Vorrichtung sehr einfach aufgebaut.

In einer vorteilhaften Weiterbildung ist vorgesehen, dass der Filter mit einem Vorfilter für die Licht absorbierenden Partikel ausgebildet ist, wobei der Vorfilter insbesondere als Prallplatte (Impaktor) oder Zyklon ausgebildet ist. Dadurch werden das Wartungsintervall und die Stabilität der Vorrichtung erhöht, weil beim Filterwechsel immer auch eine Reinigung der Vorabscheidung erfolgt. Da die Filter dadurch zusammen mit dem Vorfilter in regelmäßigen Abständen gewechselt werden können, ist die Vorrichtung damit quasi wartungsfrei.

In einer vorteilhaften Weiterbildung ist vorgesehen, dass für die Konzentrationsmessung und die Referenzmessung dieselbe Lichtquelle verwendet wird, wobei bevorzugt vorgesehen ist, dass abwechselnd der Lichtweg zwischen der Lichtquelle und dem Lichtdetektor über das beladene Filtermaterial und das unbeladene Filtermaterial geschaltet wird. Dadurch wird auch der Einfluss von Rauschen und Drift der Emitter reduziert, so dass die Messgenauigkeit erhöht wird.

Die Schaltung der beiden Lichtwege kann entweder zu 100% erfolgen, d.h. dass wenn der eine Lichtweg freigeschaltet ist, der andere Lichtweg jeweils vollständig gesperrt ist. Diese Variante wird bevorzugt.

Andererseits könnte auch nur eine teilweise Abdunklung erfolgen, wobei der eine Lichtweg nicht abgedunkelt wird, während der andere Lichtweg teilweise abgedunkelt wird und umgekehrt der eine Lichtweg abgedunkelt wird, währen der andere Lichtweg nicht abgedunkelt wird.

Dann sollten die beiden Abdunklungsfaktoren (zB. Weg 1 mit Abdunklung um Faktor a, a<1, und Weg 2 mit Abdunklung um Faktor b, b<1), unterschiedlich sein, so dass sich ein lösbares lineares Gleichungssystem mit zwei Unbekannten ergibt:
Wenn I1' = I1 + b*I2, I2' = a*I1 + I2 ist, wobei I1' das gemessene Signal für den Lichtweg 1 mit teilweise abgedunkelten Lichtweg 2 ist, I2' das gemessene Signal für den Lichtweg 2 mit teilweise abgedunkelten Lichtweg 1 ist, I1 das Signal durch den nicht abgedunkelten Lichtweg 1 ist und I2 das Signal durch den nicht abgedunkelten Lichtweg 2 ist. Man bekommt dann: I1 = (I1'-b*I2')/(1-a*b).

In einer vorteilhaften Weiterbildung ist vorgesehen, dass das Medium, das mit den Partikeln beladen ist, durch das zu beladende Filtermaterial geführt wird. Dadurch lassen sich die Partikel besonders einfach dem Filtermaterial zuführen. Wenn das Medium im Anschluss durch das nicht zu beladende Filtermaterial geführt wird, um den Referenzmessweg zu bilden, wird eine Reduktion von Querempfindlichkeiten, insb. Einfluss von Feuchtigkeit auf den Filter erzielt. Wenn das Medium einer Vorfilterung unterzogen wird, bevor es durch das zu beladende Filtermaterial geführt wird, können bestimmte Partikel von der Messung ausgenommen werden, so dass sich die Messgenauigkeit für die zu untersuchenden Partikel, beispielsweise Black Carbon, erhöht.

In einer vorteilhaften Weiterbildung ist vorgesehen, dass das Licht vor dem Filtermaterial diffus gemacht wird. Dadurch findet eine Vergleichmäßigung bzw. Homogenisierung der Lichteinstrahlung auf das Filtermaterial statt, so dass die Messgenauigkeit deutlich erhöht wird. Außerdem wird durch die diffuse Lichtstrahlung das Licht besser von den Partikeln absorbiert und damit die Messgenauigkeit ebenfalls erhöht.

In einer vorteilhaften Weiterbildung ist vorgesehen, dass als Medium Luft verwendet wird. Dadurch können Untersuchungen in Umgebungsatmosphären besonders leicht durchgeführt werden.

In einer vorteilhaften Weiterbildung ist vorgesehen, dass als Partikel Staubpartikel, bevorzugt Black Carbon, verwendet wird.

In einer vorteilhaften Weiterbildung ist vorgesehen, dass das Medium, das mit den Partikeln beladen ist, als Aerosol vorliegt.

In einer vorteilhaften Weiterbildung ist vorgesehen, dass das Filtermaterial in einer Filterkassette bereitgestellt wird, wobei die Filterkassette bevorzugt einen Pfad für die Führung des Mediums bereitstellt. Dann kann frisches Filtermaterial durch Tausch der Filterkassetten bereitgestellt werden, wobei der Wechsel sehr einfach und ohne Eingriff in das Messsystem erfolgen kann. Ein Filterbandwechsel im Messgerät ist dagegen immer mit einer längeren Unterbrechung der Messung und einem Eingriff ins Messsystem verbunden, was zu Störungen führen kann.

Alternativ kann das Filtermaterial kontinuierlich von einer Rolle entnommen werden. Dann kann eine quasikontinuierliche Messung stattfinden, bei der immer wieder frische Filtermaterialbereiche für die Konzentrationsmessung verwendet werden.

In einer vorteilhaften Weiterbildung ist vorgesehen, dass als das Filtermaterial für die Konzentrationsmessung und als das Filtermaterial für die Referenzmessung dasselbe Filtermaterial verwendet wird, wobei für die Konzentrationsmessung und für die Referenzmessung bevorzugt unterschiedliche Bereiche eines Filtermaterialabschnitts verwendet werden. Dadurch kann die Messgenauigkeit weiter verbessert werden.

In einer vorteilhaften Weiterbildung ist vorgesehen, dass das Filtermaterial nach Erreichen einer bestimmten Lichtabschwächung ausgetauscht wird, wobei die bestimmte Lichtabschwächung bevorzugt zumindest 80%, insbesondere zumindest 90% beträgt. Dann kann das Filtermaterial sehr lang ohne Wechsel der Bereiche für die Beladung verwendet werden und zugleich eine hohe Messgenauigkeit sichergestellt werden. Die Konzentration der Partikel ist dabei mit dem Gradienten der Transmissionsabnahme korreliert.

In einer vorteilhaften Weiterbildung ist vorgesehen, dass die Temperatur während der Messung geregelt wird. Dann sind verschiedene Messungen an verschiedenen Orten miteinander besonders gut vergleichbar, um die relative Luftfeuchtigkeit jeweils geregelt bzw. konstant zu halten.

In einer vorteilhaften Weiterbildung ist vorgesehen, dass das Streulicht gemessen wird, um den Einfluss Licht streuender Partikel auf das Messergebnis zu reduzieren, wobei bevorzugt ein Streulichtdetektor der Klasse PM10 und/oder ein Streulichtdetektor der Klasse PM2.5 verwendet wird. Auch dadurch kann die Vergleichbarkeit von Messergebnissen an verschiedenen Orten verbessert werden, weil der Gehalt an streuenden Partikeln an unterschiedlichen Orten stark unterschiedlich ist.

Feinstaub besteht aus einem komplexen Gemisch fester und flüssiger Partikel und wird abhängig von deren Größe in unterschiedliche Fraktionen eingeteilt. Unterschieden werden PM10 (PM, "particulate matter") mit einem maximalen Durchmesser von 10 µm, PM2,5 mit einem maximalen Durchmesser von 2,5 µm und ultrafeine Partikel mit einem Durchmesser von weniger als 0,1 µm.

In einer vorteilhaften Weiterbildung ist vorgesehen, dass für die Messung mehrere unterschiedliche Anregungswellenlängen des Lichts bereitgestellt werden. Dann kann die Messung an bestimmte Gegebenheiten besser angepasst werden.

In einer vorteilhaften Weiterbildung ist vorgesehen, dass für die Messung mehrere unterschiedliche Lichtdetektoren bereitgestellt werden, die wiederum abwechselnd jeweils die Konzentrationsmessung und die Referenzmessung durchführen. Dabei wird auch bei Verwendung unterschiedlicher Lichtdetektoren nach Auswahl eines bestimmten Lichtdetektors dieser Lichtdetektor sowohl für die Konzentrationsmessung als auch die Referenzmessung verwendet. Auch dann kann die Messung an bestimmte Gegebenheiten besser angepasst werden.

In einer vorteilhaften Weiterbildung ist vorgesehen, dass Partikel mit einer Dimension größer gleich einer vorbestimmten Dimension, bevorzugt einer Dimension größer gleich 10 µm, vorzugsweise größer gleich 2,5 µm außerhalb des Filtermaterials zumindest teilweise abgeschieden werden, wobei für die Abscheidung insbesondere eine Prallplatte (Impaktor) oder ein Zyklon verwendet werden. Dadurch wird eine besonders einfache Vorfilterung vorgenommen und insbesondere die Black Carbon-Konzentration lässt sich mit sehr hoher Genauigkeit messen. Da die Black Carbon-Konzentration von dieser Vorfilterung nicht betroffen ist, wird durch die Vorfilterung kein Messfehler in Bezug auf diese Konzentration erzeugt.

In einer vorteilhaften Weiterbildung ist vorgesehen, dass die Vorfilterung und die Filterung in einer gemeinsamen Filterkassette erfolgen, die wechselbar ausgebildet ist. Damit ist das Verfahren quasi wartungsfrei durchführbar, da die Filterkassette in regelmäßigen Abständen gewechselt werden kann.

Unabhängiger Schutz wird beansprucht für die erfindungsgemäße Vorrichtung zur Messung der Konzentration von Licht absorbierenden Partikeln in einem mit Licht absorbierenden Partikeln beladenen Medium, wobei ein Filtermaterial besteht, wobei ein Lichtdetektor besteht, mit dem im Rahmen einer Konzentrationsmessung die Transmission von Licht durch Filtermaterial, das mit Licht absorbierenden Partikeln beladenen wurde, gemessen werden kann, und wobei ein Lichtdetektor besteht, mit dem im Rahmen einer Referenzmessung die Transmission von Licht durch Filtermaterial, das nicht mit Licht absorbierenden Partikeln beladen wurde, gemessen werden kann, wobei die Vorrichtung angepasst ist, die Konzentrationsmessung mit der Referenzmessung zu normieren, dadurch gekennzeichnet, dass die Vorrichtung einen Lichtdetektor aufweist, der eingerichtet ist, abwechselnd die Konzentrationsmessung und die Referenzmessung durchzuführen.

In einer vorteilhaften Weiterbildung ist vorgesehen, dass ein erster Medienführungsweg durch das zu beladene Filtermaterial für die Konzentrationsmessung und ein zweiter Medienführungsweg durch das nicht zu beladene Filtermaterial für die Referenzmessung ausgebildet ist, wobei die Medienführungswege so ausgebildet sind, dass das mit Licht absorbierenden Partikeln beladene Medium zuerst durch den ersten Medienführungsweg und anschließend durch den zweiten Medienführungsweg geführt wird, wobei ein Lichtwegeschalter für die Schaltung zwischen einem ersten Lichtweg von einer Lichtquelle durch mit Licht absorbierenden Partikeln beladenes Filtermaterial hin zu dem Lichtdetektor und einem zweiten Lichtweg von der Lichtquelle durch nicht mit Licht absorbierenden Partikeln beladenes Filtermaterial hin zu dem Lichtdetektor besteht.

In einer vorteilhaften Weiterbildung ist vorgesehen, dass die Vorrichtung angepasst ist, das erfindungsgemäße Verfahren durchzuführen.

In einer vorteilhaften Weiterbildung ist vorgesehen, dass ein Lichtwegeschalter für die Schaltung zwischen einem ersten Lichtweg von einer Lichtquelle durch mit Licht absorbierenden Partikeln beladenes Filtermaterial hin zum Lichtdetektor und einem zweiten Lichtweg von einer Lichtquelle durch nicht mit Licht absorbierenden Partikeln beladenes Filtermaterial hin zum Lichtdetektor besteht, wobei der Lichtwegeschalter bevorzugt ein mechanisches und/oder ein elektrooptisches Element aufweist, wobei das Element insbesondere eine Chopperscheibe, eine Blende, ein Shutter, ein beweglicher Spiegel, ein beweglicher Polarisationsfilter oder ein elektrischer Polarisationsfilter ist. Bei der Lichtquelle muss es sich nicht um dieselbe Lichtquelle für beide Messwege handeln, kann es aber, was die Messgenauigkeit verbessert.

In einer vorteilhaften Weiterbildung ist vorgesehen, dass ein Filter mit dem zu beladenem Filtermaterial und dem nicht zu beladenem Filtermaterial besteht, wodurch die Vorrichtung sehr einfach aufgebaut ist.

In einer vorteilhaften Weiterbildung ist vorgesehen, dass der Filter wechselbar ist. Dadurch kann die Vorrichtung sehr einfach gewartet werden. Wenn die Filter in regelmäßigen Abständen gewechselt werden, ist eine kontinuierliche Messung bei einfacher Wartung möglich.

In einer vorteilhaften Weiterbildung ist vorgesehen, dass der Filter als Filterkassette ausgebildet ist, wobei die Filterkassette bevorzugt steif ausgebildet ist. Dann lässt sich die Wartung besonders einfach vornehmen. Außerdem muss das Filtermaterial selbst nicht mehr manipuliert werden, wodurch sich die Messgenauigkeit weiter erhöht, da das Filtermaterial sehr empfindlich ist.

In einer vorteilhaften Weiterbildung ist vorgesehen, dass der Filter mit einem ersten Lichtweg für das zu beladene Filtermaterial für die Konzentrationsmessung und einem zweiten Lichtweg für das nicht zu beladene Filtermaterial für die Referenzmessung ausgebildet ist. Dadurch ist die Vorrichtung sehr einfach aufgebaut.

In einer vorteilhaften Weiterbildung ist vorgesehen, dass der Filter mit einem ersten Medienführungsweg für das zu beladene Filtermaterial für die Konzentrationsmessung und einem zweiten Medienführungsweg für das nicht zu beladene Filtermaterial für die Referenzmessung ausgebildet ist. Auch dadurch ist die Vorrichtung sehr einfach aufgebaut.

In einer vorteilhaften Weiterbildung ist vorgesehen, dass der Filter mit einem Vorfilter für die Licht absorbierenden Partikel ausgebildet ist, wobei der Vorfilter insbesondere als Prallplatte oder Zyklon ausgebildet ist. Dadurch werden das Wartungsintervall und die Stabilität der Vorrichtung erhöht, weil beim Filterwechsel immer auch eine Reinigung der Vorabscheidung erfolgt. Da die Filter dadurch zusammen mit dem Vorfilter in regelmäßigen Abständen gewechselt werden können, ist die Vorrichtung damit quasi wartungsfrei.

In einer vorteilhaften Weiterbildung ist vorgesehen, dass ein Filterhalter besteht, der öffenbar ist, um den Filter aufzunehmen. Dadurch lässt sich der Filter besonders einfach wechseln.

In einer vorteilhaften Weiterbildung ist vorgesehen, dass der Filterhalter ausgebildet ist, den Filter zu klemmen. Dadurch lässt sich der Filter besonders einfach wechseln.

In einer vorteilhaften Weiterbildung ist vorgesehen, dass der Filterhalter ein Licht durchlässiges optisches Element aufweist, das im Zustand des Haltens des Filters den Filter zumindest bereichsweise mediendicht abschließt, wobei das optische Element insbesondere einen Medienführungsweg im Zusammenwirken mit dem Filter definiert. Dann kann die Vorrichtung sehr einfach und kompakt aufgebaut sein.

In einer vorteilhaften Weiterbildung ist vorgesehen, dass der Filterhalter einen Lichtdiffusor aufweist, der insbesondere zumindest einen Medienführungsweg aufweist. Dann kann die Vorrichtung sehr einfach und kompakt aufgebaut sein.

In einer vorteilhaften Weiterbildung ist vorgesehen, dass der Filterhalter ausgebildet ist, einen gebrauchten Filter automatisch durch einen neuen Filter zu ersetzen, wobei der neue Filter insbesondere einem Magazin entnommen wird. Dadurch wird eine quasikontinuierliche Messung über längere Zeit (Wochen, Monate) ermöglicht, wobei ein einfacher Wechsel bzw. Nachfüllen des Vorrats ohne Unterbrechung der Messung möglich ist. Weiterhin wird ein direkter Eingriff durch einen Benutzer ins Messsystem vermieden.

Die jetzt mit der Anmeldung und auch die später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist somit von der Offenbarung dieser Anmeldung abgedeckt.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

Somit können alle in der allgemeinen Beschreibung der Erfindung, der Beschreibung der Ausführungsbeispiele, den Ansprüchen und in den Figuren dargestellten Merkmale sowohl einzeln als auch in beliebiger Kombination miteinander erfindungswesentlich sein. Diese Merkmale bzw. Merkmalskombinationen können jeweils eine selbständige Erfindung begründen, deren Inanspruchnahme sich ausdrücklich vorbehalten wird. Dabei müssen einzelne Merkmale aus der Beschreibung eines Ausführungsbeispiels nicht zwingend mit ein oder mehreren oder allen anderen in der Beschreibung dieses Ausführungsbeispiels angegebenen Merkmale kombiniert werden, diesbezüglich ist jede Unterkombination ausdrücklich mit offenbart. Außerdem können gegenständliche Merkmale einer Vorrichtung umformuliert auch als Verfahrensmerkmale Verwendung finden und Verfahrensmerkmale können umformuliert als gegenständliche Merkmale einer Vorrichtung Verwendung finden. Eine solche Umformulierung ist somit automatisch mit offenbart.

Die Merkmale und weitere Vorteile der vorliegenden Erfindung werden im Folgenden anhand der Beschreibung bevorzugter Ausführungsbeispiele im Zusammenhang mit den Figuren deutlich werden. Dabei zeigen rein schematisch:
- Fig. 1: ein Aethalometer nach dem Stand der Technik in einer schematischen Darstellung,
- Fig. 2: das erfindungsgemäße Aethalometer gemäß einer ersten bevorzugten Ausführungsform in einer schematischen Darstellung in einem ersten Betriebszustand,
- Fig. 3: das erfindungsgemäße Aethalometer nach Fig. 2 in einer schematischen Darstellung in einem zweiten Betriebszustand,
- Fig. 4: das erfindungsgemäße Aethalometer gemäß einer zweiten bevorzugten Ausführungsform in einer schematischen Darstellung in einer ersten Ansicht und
- Fig. 5: das erfindungsgemäße Aethalometer nach Fig. 4 in einer schematischen Darstellung in einer zweiten Ansicht.

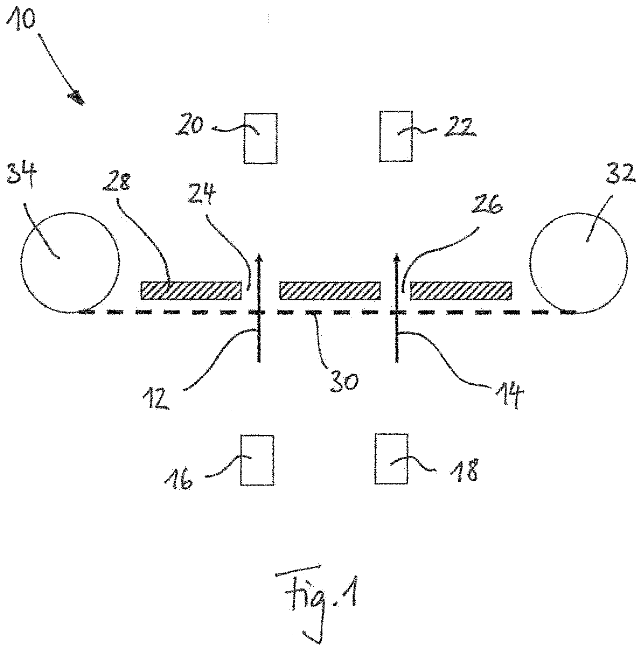

In Fig. 1 ist ein Aethalometer 10 nach dem Stand der Technik rein schematisch gezeigt. Es ist zu erkennen, dass zwei Messwege 12, 14 bestehen, wobei jedem Messweg 12, 14 eine Lichtquelle 16, 18 und ein Lichtdetektor 20, 22 zugeordnet sind. Die Messwege 12, 14 verlaufen durch Öffnungen 24, 26 einer Blende 28. In Strahlrichtung vor der Blende 28 verläuft ein Endlosfiltermaterial 30, das von einer ersten Rolle 32 ab- und auf eine zweite Rolle 34 aufgewickelt wird.

Nicht gezeigt sind Mittel zur Zuführung und Leitung eines Medienstroms.

Der Messweg 12 ist hierbei der Konzentrationsmessweg und der Messweg 14 ist der Referenzmessweg.

Dieses Aethalometer 10 wird nun wie folgt verwendet. Über den Konzentrationsmessweg 12 wird ein mit Partikeln beladener Medienstrom, beispielsweise mit Staubpartikeln beladene Luft, die aus einer zu überwachenden Umgebung entnommen wurde, geführt, wobei sich die Partikel, beispielsweise Black Carbon, auf dem Filtermaterial 30 vor der Blendenöffnung 24 ablagern.

Dadurch wird die Transmission des von der Lichtquelle 16 zum Lichtdetektor 20 gestrahlten Lichts immer weiter reduziert, wobei die Transmission gemessen wird.

Zeitlich parallel oder auch zeitlich versetzt wird ein nicht mit Partikeln beladener Medienstrom, beispielsweise gereinigte Luft, über den Referenzweg 14 durch das Filtermaterial 30 geführt und dabei die Transmission des von der Lichtquelle 18 zum Lichtdetektor 22 gestrahlten Lichts gemessen.

Durch Differenzbildung wird die ermittelte Transmission des Konzentrationsmessweges 12 normiert und daraus die Konzentration der Partikel in dem Medienstrom bestimmt.

Die bestimmte Konzentration ist allerdings Messfehlern unterworfen, da zum einen für beide Messwege 12, 14 unterschiedliche Lichtquellen 16, 18 und zum anderen unterschiedliche Lichtdetektoren 20, 22 verwendet werden, die jeweils unterschiedliche Charakteristika aufweisen, so dass sowohl Messdifferenzen als auch Signaldifferenzen bestehen.

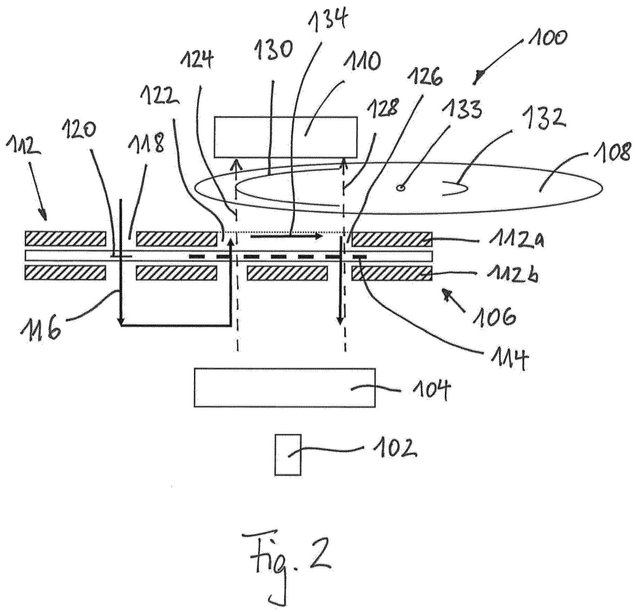

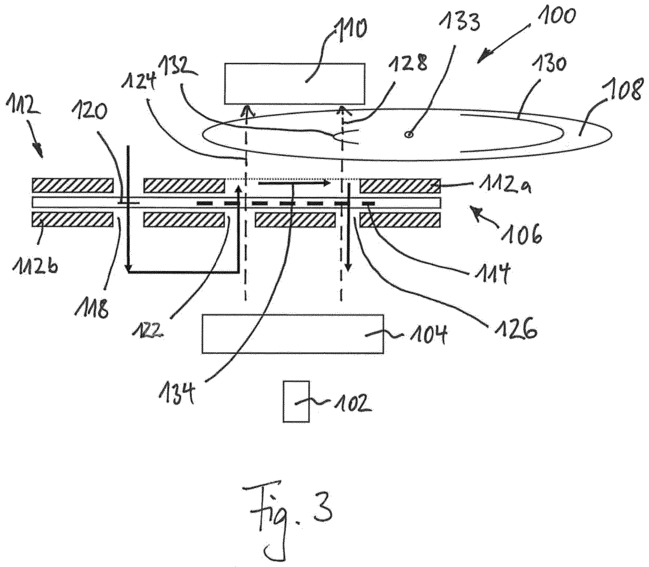

In den Fig. 2 und 3 ist die erfindungsgemäße Vorrichtung 100 gemäß einer ersten bevorzugten Ausgestaltung, die ebenfalls als Aethalometer ausgebildet ist, in zwei unterschiedlichen Betriebszuständen gezeigt.

Es ist zu erkennen, dass die Vorrichtung 100 eine Lichtquelle 102, einen Lichtdiffusor 104, eine Filterkassette 106, einen Lichtwegeschalter 108 und einen Lichtdetektor 110 aufweist.

Der Diffusor 104 kann beispielsweise als Milchglasplatte ausgebildet sein.

Die Filterkassette 106 weist einen steif ausgebildeten Rahmen 112 auf, in dem das Filterelement 114 selbst fest angeordnet ist. Das Filterelement 114 ist beispielsweise ein Filterpapier.

Die Filterkassette 106 stellt ggf. in Verbindung mit weiteren hier nicht gezeigten Elementen einen Medienführungspfad 116 bereit, der so abgedichtet ausgebildet ist, dass das Medium diesen nicht verlassen kann. Dazu ist das Filterelement 114 so zwischen den beiden Backen 112a, 112b des Rahmens der Filterkassette 106 geklemmt und ggf. verklebt, dass das Medium den Medienführungsweg 116 nicht verlassen kann.

Die Filterkassette 106 weist eine erste Durchbrechung 118 auf, in der ein Impaktor in Form einer Prallplatte 120 angeordnet ist. Weiterhin weist die Filterkassette 106 eine zweite Durchbrechung 122, die parallel zum Konzentrationsmessweg 124 liegt, und eine dritte Durchbrechung 126, die parallel zum Referenzmessweg 128 liegt, auf.

Der Lichtwegeschalter 108 ist als Chopperscheibe ausgebildet, die sich mit zwei ringsegmentförmigen Durchbrechungen 130, 132 um eine Zentralachse 133 dreht, wobei die erste Durchbrechung 130 dem Konzentrationsmessweg 124 zugeordnet ist und die zweite Durchbrechung 132 dem Referenzmessweg 128 zugeordnet ist.

Es ist zu erkennen, dass sowohl der Konzentrationsmessweg 124 als auch der Referenzmessweg 128 mit Licht aus der Lichtquelle 102 beaufschlagt werden. Dieses Licht trifft jeweils nach Durchquerung der entsprechenden Durchbrechungen 122, 126 in der Filterkassette 106, des Filterelements 114 und der jeweiligen Durchbrechungen 130, 132 in der Chopperscheibe 108 auf den Lichtdetektor 110, wobei die Lichtintensität gemessen wird.

In Fig. 1 ist der Betriebszustand der Vorrichtung 100 gezeigt, in der die Durchbrechung 130 den Konzentrationsmessweg 124 freigibt und die Chopperscheibe 108 den Referenzmessweg 128 sperrt. In Fig. 2 ist dagegen der Betriebszustand der Vorrichtung 100 gezeigt, in der die Chopperscheibe 108 den Konzentrationsmessweg 124 sperrt und die Durchbrechung 132 den Referenzmessweg 128 freigibt.

Anstelle von einer Lichtquelle 102 und einem Lichtdetektor 110 könnten auch mehrere Lichtquellen und/oder mehrere Lichtdetektoren (jeweils nicht gezeigt) z.B. für die Bereitstellung unterschiedlicher Wellenlängen und Lichtintensitäten verwendet werden, wobei aber jeweils ein Paar von Lichtquelle und Lichtdetektor sowohl für die Konzentrationsmessung als auch die Referenzmessung verwendet wird. Durch unterschiedliche Lichtdetektoren können auch die Empfindlichkeiten der Messung angepasst werden.

Das erfindungsgemäße Messverfahren funktioniert nun folgendermaßen:
Ein Medienstrom, der mit Partikeln, beispielsweise Black Carbon versehen ist, (nicht gezeigt) wird einer zu untersuchenden Umgebung entnommen und entlang des Medienführungsweges 116 geführt.

Dabei tritt das Medium zuerst in die erste Durchbrechung 120 der Filterkassette 106 ein und trifft dort auf den Impaktor 120, der so ausgebildet ist, dass sich darauf Partikel mit einer Dimension > 10 µm, alternativ > 2.5 µm ablagern. Dadurch erfolgt eine Vorfilterung des Mediums, um beispielsweise Partikel, die nicht absorbierend sondern streuend sind, herauszufiltern. Dadurch können Störungen der Messung durch diese herausgefilterten Staubpartikel reduziert werden.

Anschließend tritt das solchermaßen vorgefilterte Medium in die zweite Durchbrechung 122 der Filterkassette 106 ein und durchquert dabei das Filterelement 114, auf dem sich die noch im Medium verbliebenen Partikel abscheiden.

Während der Konzentrationsmessung, die immer dann stattfindet, wenn der Konzentrationsmessweg 124 durch die erste Durchbrechung 130 der Chopperscheibe 108 freigegeben ist, wird die Intensität des transmittierten Lichts durch den Lichtdetektor 110 gemessen. Diese Intensität sinkt mit zunehmendem Grad der Belegung des Filterelements 114 in der Durchbrechung 122 mit den Partikeln.

Der Medienstrom 116 wird nach der zweiten Durchbrechung 122 umgelenkt in eine Richtung 134 parallel zum Filterelement 114 und tritt dann in die dritten Durchbrechung 126 der Filterkassette 106 ein und durchquert dabei wiederum das Filterelement 114.

Da sich alle im Medium enthaltenen Partikel schon auf dem Filterelement 114 in der zweiten Durchbrechung 122 abgeschieden haben, erfolgt auf dem Filterelement 114 in der dritten Durchbrechung 126 keine weitere Abscheidung, so dass hier immer eine Referenz besteht. Auf diese Weise ist keine separate Filterung der Luft für den Referenzmessweg 128 notwendig.

Während der Referenzmessung, die immer dann stattfindet, wenn der Referenzmessweg 128 durch die zweite Durchbrechung 132 der Chopperscheibe 108 freigegeben ist, wird die Intensität des transmittierten Lichts durch den Lichtdetektor 110 gemessen. Diese Intensität bleibt im Wesentlichen während der Messzeit gleich.

Somit kann das entstehende Signal des Lichtdetektors 110 jeweils dem Konzentrationsmessweg 124 oder dem Referenzmessweg 128 zugeordnet werden. Durch die Verrechnung der Signale wird der Einfluss der Drift der Lichtquelle 102 und des Lichtdetektors 110 reduziert. Dies führt zu einer Stabilitätsverbesserung für Langzeit- und Kurzzeitmessung. Außerdem wird über die sukzessive Medienführung vom Konzentrationsmessweg 122 zum Referenzmessweg 128 die Messgenauigkeit durch Reduktion von Querempfindlichkeiten, insb. Einfluss von Feuchtigkeit auf den Filter, weiter erhöht.

Durch die Veränderung der Lichtintensität während der Messdauer kann die Konzentration der Partikel im Medium berechnet werden, wobei typische Konzentrationen von Black Carbon in Umgebungsluft im ng/m³-Bereich liegen.

Bei Erreichen einer bestimmten Lichtabschwächung wird ein Wechsel der Filterkassette 106 vorgenommen. Dabei wird die alte Filterkassette 106 entfernt und eine neue Filterkassette 106 aus einem Vorrat entnommen, wodurch eine quasikontinuierliche Messung über längere Zeit (Woche/n, Monat/e) möglich ist.

Dadurch, dass der Impaktor 120 zusammen mit dem Filterelement 114 in der Filterkassette 106 kombiniert ist, wird das Wartungsintervall und die Stabilität der Vorrichtung 100 erhöht. Dies liegt daran, dass die Teile des Impaktors 120, an denen sich Partikel anlagern, mit der Filterkassette 106 kombiniert sind, wodurch ein Wechsel der Filterkassette 106 immer auch zu einer Reinigung der Vorabscheidung und damit zur Verlängerung des Wartungsintervalls und zusätzlich der Stabilität der Vorabscheidung führt.

Diese Vorrichtung 100 ist somit insgesamt sehr einfach und kompakt aufgebaut und ermöglicht eine sehr genaue Messung der Partikelkonzentration bei hoher Langzeitstabilität und langer Wartungsfreiheit.

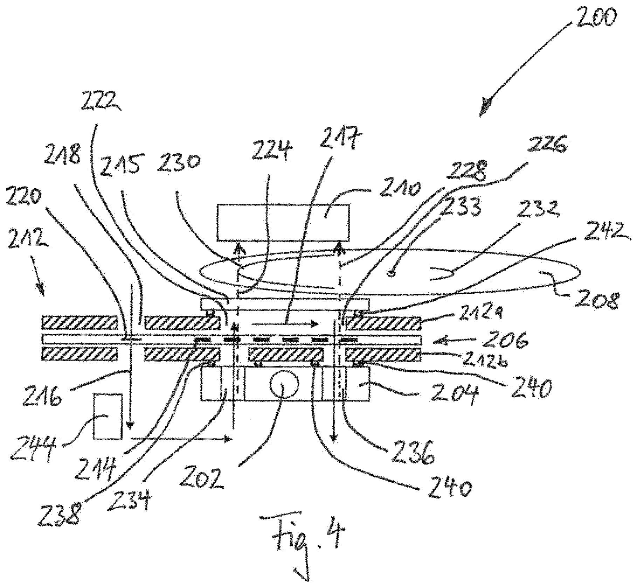

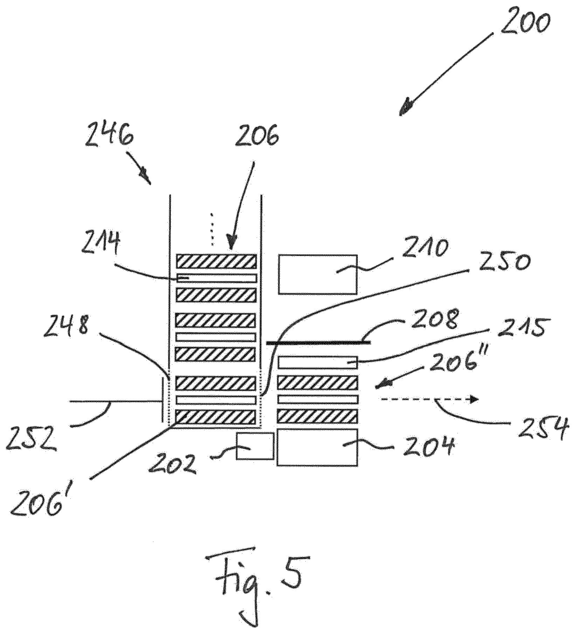

In den Fig. 4 und 5 ist die erfindungsgemäße Vorrichtung 200 gemäß einer zweiten bevorzugten Ausgestaltung, die ebenfalls als Aethalometer ausgebildet ist, in zwei unterschiedlichen Ansichten gezeigt, wobei Fig. 4 eine Ansicht von vorn und Fig. 5 eine Ansicht von der Seite zeigt.

Es ist zu erkennen, dass diese Vorrichtung 200 wiederum eine Lichtquelle 202, einen Lichtdiffusor 204, eine Filterkassette 206, einen Lichtwegeschalter 208 und einen Lichtdetektor 210 aufweist, deren Funktionsweise im Wesentlichen der in Bezug auf die Vorrichtung 100 beschriebenen entspricht, wobei es aber auch Abweichungen gibt.

Der Diffusor 204 ist wiederum als Milchglasplatte ausgebildet.

Die Filterkassette 206 weist einen steif ausgebildeten Rahmen 212 auf, in dem das Filterelement 214 selbst fest angeordnet ist. Das Filterelement 214 ist beispielsweise ein Filterpapier.

Die Filterkassette 206 stellt in Verbindung mit einer Glasscheibe 215 und dem Diffusor 204 einen Medienführungspfad 216, 217 bereit, der so abgedichtet ausgebildet ist, dass das Medium diesen nicht verlassen kann. Dazu ist das Filterelement 214 so zwischen den beiden Backen 212a, 212b des Rahmens 212 der Filterkassette 206 geklemmt und ggf. verklebt, dass das Medium den Medienführungsweg 216 nicht verlassen kann.

Die Filterkassette 206 weist eine erste Durchbrechung 218 auf, in der ein Impaktor in Form einer Prallplatte 220 angeordnet ist. Weiterhin weist die Filterkassette 206 eine zweite Durchbrechung 222, die parallel zum Konzentrationsmessweg 224 liegt, und eine dritte Durchbrechung 226, die parallel zum Referenzmessweg 228 liegt, auf.

Der Lichtwegeschalter 208 ist als Chopperscheibe ausgebildet, die sich mit zwei ringsegmentförmigen Durchbrechungen 230, 232 um eine Zentralachse 233 dreht, wobei die erste Durchbrechung 230 dem Konzentrationsmessweg 224 zugeordnet ist und die zweite Durchbrechung 232 dem Referenzmessweg 228 zugeordnet ist.

Es ist zu erkennen, dass sowohl der Konzentrationsmessweg 224 als auch der Referenzmessweg 228 mit Licht aus der Lichtquelle 202 beaufschlagt werden. Dazu ist die Lichtquelle 202 seitlich an dem Diffusor 204 angeordnet und strahlt das Licht in diesen ein, wo es sich gleichmäßig verteilt und dadurch auch in die Durchbrechungen 234, 236 des Diffusors 204 einstrahlt.

Dieses Licht trifft jeweils nach Durchquerung der entsprechenden Durchbrechungen 222, 226 in der Filterkassette 206, des Filterelements 214 und der jeweiligen Durchbrechungen 230, 232 in der Chopperscheibe 208 auf den Lichtdetektor 210, wobei die Lichtintensität gemessen wird.

Zur Abdichtung der Filterkassette 206 zwischen dem Diffusor 204 und der Glasscheibe 215 bestehen an der Filterkassette 206 entsprechende Dichtringe 238, 240 zur Abdichtung der Filterkassette 206 gegenüber den Durchbrechungen 234, 236 und ein Dichtring 242 zur Abdichtung der Filterkassette 206 gegenüber der Glasscheibe 215.

Darüber hinaus besteht ein Streulicht-Staubsensor (PM2.5 und/oder PM10) 244, durch den der Einfluss des streuenden Staubes, der nicht durch den Impaktor 220 der Filterkassette 206 beseitigt wurde, weiter reduziert werden.

An dem Diffusor 204 sind zwei Schläuche (nicht gezeigt) befestigt, wobei einer den Medienstrom nach dem Streulicht-Staubsensor 244 zur Durchbrechung 234 des Konzentrationsmessweges 224 leitet und der andere den Medienstrom von der Durchbrechung 236 des Diffusors 204 in die Umgebung ableitet.

Die Glasscheibe 215 ist relativ gegenüber dem Diffusor 204 verlagerbar gehalten, so dass der Abstand zwischen Diffusor 204 und Glasscheibe 215 verändert werden kann. Dadurch kann in einem ersten Betriebszustand die Filterkassette 206 zwischen Diffusor 204 und Glasscheibe 215 so geklemmt werden, dass der Medienführungsweg 216 abgedichtet ist, und in einem zweiten Betriebszustand die Filterkassette 206 herausgenommen werden.

Dazu besteht, wie in Fig. 5 gezeigt, ein Filterhalter 246, in dem ein Vorrat an Filterkassetten 206 angeordnet ist. Der Filterhalter 246 weist Öffnungen 248, 250 auf und einen Filterwechsler 252 in Form eines Schiebers, der jeweils bedarfsweise eine neue Filterkassette 206' aus dem Filterhalter 246 durch die Öffnung 250 herausschiebt.

Dadurch wird die gebrauchte Filterkassette 206" (nachdem die Klemmung zwischen Diffusor 204 und Glasscheibe 215 aufgehoben wurde) aus dem Bereich zwischen Diffusor 204 und Glasscheibe 215 herausgeschoben und an ihrer Stelle die neue Filterkassette 206' zwischen Diffusor 204 und Glasscheibe 215 platziert und kann dort wieder geklemmt werden.

Die gebrauchte Filterkassette 206" wird ausgeworfen 254 und kann in einem Auffangbehälter (nicht gezeigt) aufgenommen werden. Dadurch ist ein einfacher und zudem automatischer Wechsel der Filterkassetten 206 möglich. Außerdem ist ein Nachfüllen des Vorrats in dem Filterhalter 246 ohne Unterbrechung der Messung möglich. Weiterhin wird ein direkter händischer Eingriff in den Messteil 202, 204, 206, 2215, 208, 210 der Vorrichtung 200 vermieden.

Bei üblichen Aethalometern 10 nach Fig. 1 wird dagegen für die quasikontinuierliche Messung ein Filterband 30 verwendet, das beim Erreichen einer bestimmten Lichtabschwächung weitertransportiert wird, um so die Messposition und zugleich auch die Referenzposition zu erneuern. Dabei ist der Wechsel des Filterbandes 30 immer mit einer längeren Unterbrechung der Messung und einem Eingriff ins Messsystem 10 verbunden.

Durch folgende Maßnahmen kann die Messung noch weiter verbessert werden:
Wenn die gesamte Vorrichtung 100, 200 temperaturgeregelt wird, kann der Einfluss der Luftfeuchtigkeit des Mediums auf die Messung durch die Stabilisierung der relativen Luftfeuchtigkeit des Mediums weiter reduziert werden.

Alternativ zu einem Impaktor 120 kann auch ein Zyklon oder dgl. für die Vorfilterung genutzt werden.

Aus der vorstehenden Darstellung ist deutlich geworden, dass mit der vorliegenden Erfindung die Genauigkeit bei der Konzentrationsbestimmung von Partikeln, insbesondere von Black Carbon weiter erhöht werden kann. Die entsprechende Vorrichtung 100, 200 ist dabei sehr einfach und kompakt aufgebaut und ermöglicht eine sehr genaue Messung der Partikelkonzentration bei hoher Langzeitstabilität und langer Wartungsfreiheit.

Folgende besondere Ausgestaltungen und Vorteile lassen sich mit der vorliegenden Erfindung verwirklichen:
Ein mit Licht absorbierenden Partikeln beladenes Medium (beispielsweise eine mit BC (Black Carbon/Ruß) beladenes Aerosol) wird nacheinander an zwei verschiedenen Stellen (Filter F1 und Filter F2) durch das gleiche Filtermaterial geführt. Dabei werden die Partikel bevorzugt vollständig an F1 abgeschieden. An F2 gibt das Medium nur noch proportional zu F1 Feuchtigkeit ab. Während dieses Prozesses wird kontinuierlich an beiden Stellen F1 (Konzentrationsmessung) und F2 (Referenzmessung) die Lichtdämpfung bei einer geeigneten Wellenlänge gemessen. Der Messwert bei F2 wird als Referenz genutzt. Mit diesem Referenzwert werden Variationen des Filtermaterials und der Feuchtigkeit bei der kontinuierlichen Messung der Lichtdämpfung korrigiert. Für die Bestimmung des Konzentrations-Wertes wird zusätzlich auch das Volumen des durch den Filter geführten Mediums gemessen. Vorzugsweise befindet sich vor F1 noch ein Partikelabscheider (Zyklon, Impaktor) zur Abscheidung aller Partikel > PM10 bzw. > PM2.5.

Für die Messung der Lichtdämpfung im Rahmen der Konzentrationsmessung und der Referenzmessung wird bevorzugt die identische Lichtquelle (in besonderer Ausführung mit verschiedenen Wellenlängen) und der identische Detektor verwendet, um den Einfluss der Lichtquelle und des Detektors (Alterung, Temperaturabhängigkeit, Verschmutzung, Einfluss der Ansteuerung der Lichtquelle, Einfluss der Messung des Detektorsignals) über die Normierung der Konzentrationsmessung mit der Referenzmessung zu reduzieren.

In vorteilhafter Weise wird für die Messung der Lichtdämpfung an F1 und F2 ein Chopperrad/ eine Chopperscheibe verwendet.

Bevorzugt wird ein kompaktes Filterelement mit integriertem Impaktor (PM10/PM2.5 Vorabscheider) und den zwei Filterstellen F1 und F2 verwendet. Dadurch kann ein schneller Filterwechsel erfolgen, bei dem auch der Impaktor gewechselt wird. Dadurch ist keine Wartung des Impaktor allein nötig, wodurch stabiler Langzeitbetrieb ermöglicht wird.

Besonders bevorzugt werden die Filterelemente mit einem automatischen Filterwechsler gewechselt.

In vorteilhafter Weise wird vor F1 die PM-Partikelkonzentration gemessen, um den Einfluss des Streulichtes auf die Messung zu korrigieren.

Wenn das Medium vor der Konzentrationsmessung beheizt wird, werden Wassertröpfchen/Nebel vermieden und zugleich kann der Flow geregelt werden.

### Bezugszeichenliste

- 10: Aethalometer nach dem Stand der Technik
- 12: Konzentrationsmessweg
- 14: Referenzmessweg
- 16, 18: Lichtquellen
- 20, 22: Lichtdetektoren
- 24, 26: Öffnungen
- 28: Blende
- 30: Endlosfiltermaterial
- 32: erste Rolle
- 34: zweite Rolle
- 100: erfindungsgemäße Vorrichtung gemäß einer ersten bevorzugten Ausgestaltung
- 102: Lichtquelle
- 104: Lichtdiffusor, Milchglasplatte
- 106: Filterkassette
- 108: Lichtwegeschalter, Chopperscheibe
- 110: Lichtdetektor
- 112: Rahmen
- 112a, 112b: Backen des Rahmens 112
- 114: Filterelement
- 116: Medienführungspfad
- 118: erste Durchbrechung der Filterkassette 106
- 120: Impaktor, Prallplatte 120
- 122: zweite Durchbrechung der Filterkassette 106
- 124: Konzentrationsmessweg
- 126: dritte Durchbrechung der Filterkassette 106
- 128: Referenzmessweg
- 130: erste Durchbrechung der Chopperscheibe 108
- 132: zweite Durchbrechung der Chopperscheibe 108
- 133: zentrale Drehachse der Chopperscheibe 108
- 134: Richtung des Medienführungspfads 116 parallel zum Filterelement 114
- 200: erfindungsgemäße Vorrichtung gemäß einer zweiten bevorzugten Ausgestaltung
- 202: Lichtquelle
- 204: Lichtdiffusor
- 206, 206', 206": Filterkassette
- 208: Lichtwegeschalter, Chopperscheibe
- 210: Lichtdetektor
- 212: Rahmen
- 212a, 212b: Backen des Rahmens 212 der Filterkassette 206
- 214: Filterelement
- 215: Glasscheibe
- 216: Medienführungspfad
- 217: Teil des Medienführungspfads 216
- 218: erste Durchbrechung der Filterkassette 206
- 220: Impaktor, Prallplatte
- 222: zweite Durchbrechung der Filterkassette 206
- 224: Konzentrationsmessweg
- 226: dritte Durchbrechung der Filterkassette 206
- 228: Referenzmessweg
- 230, 232: ringsegmentförmigen Durchbrechungen
- 233: Zentralachse
- 234, 236: Durchbrechungen des Diffusors 204
- 238, 240, 242: Dichtringe der Filterkassette 206
- 244: Streulicht-Staubsensor
- 246: Filterhalter
- 248, 250: Öffnungen des Filterhalters 246
- 252: Filterwechsler, Schieber
- 254: Auswurf der gebrauchten Filterkassette 206"

## Patentansprüche

1. Verfahren zur Messung der Konzentration von Licht absorbierenden Partikeln in einem mit den Licht absorbierenden Partikeln beladenen Medium, wobei im Rahmen einer Konzentrationsmessung die Transmission von Licht durch Filtermaterial (114; 214), das mit Licht absorbierenden Partikeln beladen wurde, gemessen wird, wobei im Rahmen einer Referenzmessung die Transmission von Licht durch Filtermaterial (114; 214), das nicht mit Licht absorbierenden Partikeln beladen wurde, gemessen wird, wobei die Konzentrationsmessung mit der Referenzmessung normiert wird, **dadurch gekennzeichnet, dass** zur Messung des transmittierten Lichts ein Lichtdetektor (110; 210) verwendet wird, der abwechselnd die Konzentrationsmessung (124; 224) und die Referenzmessung (128; 228) durchführt.

2. Verfahren nach Anspruch 1, **dadurch gekennzeichnet, dass** das Medium, das mit den Licht absorbierenden Partikeln beladen ist, durch das zu beladende Filtermaterial (114; 214) geführt wird, wobei das Medium im Anschluss durch das nicht zu beladende Filtermaterial (114; 214) geführt wird, wobei für die Konzentrationsmessung (124; 224) und die Referenzmessung (128; 228) dieselbe Lichtquelle (102; 202) verwendet wird, wobei abwechselnd der Lichtweg (124, 128; 224, 228) zwischen der Lichtquelle (102; 202) und dem Lichtdetektor (110; 210) über das beladene Filtermaterial (114; 214) und das unbeladene Filtermaterial (114; 214) geschaltet wird.

3. Verfahren nach Anspruch 1 oder 2, **dadurch gekennzeichnet, dass** ein Lichtwegeschalter (108; 208) für die Schaltung zwischen einem ersten Lichtweg (124; 224) von einer Lichtquelle (102; 202) durch mit Licht absorbierenden Partikeln beladenes Filtermaterial (114; 214) hin zum Lichtdetektor (110; 210) und einem zweiten Lichtweg (128; 228) von einer Lichtquelle (102; 202) durch nicht mit Licht absorbierenden Partikeln beladenes Filtermaterial (114; 214) hin zum Lichtdetektor (110; 210) besteht, wobei der Lichtwegeschalter des Lichtweges (108; 208) bevorzugt ein mechanisches und/oder ein elektrooptisches Element aufweist, wobei das Element insbesondere eine Chopperscheibe (108; 208), eine Blende, ein Shutter, ein beweglicher Spiegel, ein beweglicher Polarisationsfilter oder ein elektrischer Polarisationsfilter ist.

4. Verfahren nach einem der vorherigen Ansprüche, **dadurch gekennzeichnet, dass** ein Filter (106; 206, 206', 206") mit dem zu beladenem Filtermaterial (114; 214) und dem nicht zu beladenem Filtermaterial (114; 214) besteht, wobei der Filter (106; 206, 206', 206") bevorzugt
- wechselbar ausgebildet ist und/oder
- als Filterkassette (106; 206, 206', 206") ausgebildet ist, wobei die Filterkassette (106; 206, 206', 206") bevorzugt steif ausgebildet ist, und/oder
- mit einem ersten Lichtweg (124; 224) für das zu beladene Filtermaterial (114; 214) für die Konzentrationsmessung und einem zweiten Lichtweg (128; 228) für das nicht zu beladene Filtermaterial (114; 214) für die Referenzmessung ausgebildet ist und/oder
- mit einem ersten Medienführungsweg für das zu beladene Filtermaterial (114; 214) für die Konzentrationsmessung (124; 224) und einem zweiten Medienführungsweg für das nicht zu beladene Filtermaterial (114; 214) für die Referenzmessung (128; 228) ausgebildet ist und/oder
- mit einem Vorfilter (120; 220) für die Licht absorbierenden Partikel ausgebildet ist, wobei der Vorfilter insbesondere als Prallplatte (120; 220) oder Zyklon ausgebildet ist.

5. Verfahren nach einem der vorherigen Ansprüche, **dadurch gekennzeichnet, dass** für die Konzentrationsmessung (124; 224) und die Referenzmessung (128; 228) dieselbe Lichtquelle (102; 202) verwendet wird, wobei bevorzugt vorgesehen ist, dass abwechselnd der Lichtweg (124, 128; 224, 228) zwischen der Lichtquelle (102; 202) und dem Lichtdetektor (110; 210) über das beladene Filtermaterial (114; 214) und das unbeladene Filtermaterial (114; 214) geschaltet wird.

6. Verfahren nach einem der vorherigen Ansprüche, **dadurch gekennzeichnet, dass** das Medium, das mit den Partikeln beladen ist, durch das zu beladende Filtermaterial (114; 214) geführt wird, wobei bevorzugt vorgesehen ist, dass das Medium im Anschluss durch das nicht zu beladende Filtermaterial (114; 214) geführt wird, wobei insbesondere vorgesehen ist, dass das Medium einer Vorfilterung (120; 220) unterzogen wird, bevor es durch das zu beladende Filtermaterial (114; 214) geführt wird.

7. Verfahren nach einem der vorherigen Ansprüche, **dadurch gekennzeichnet,**
**dass** das Licht vor dem Filtermaterial (114; 214) diffus (104; 204) gemacht wird und/oder
**dass** als Medium Luft verwendet wird und/oder
**dass** als Partikel Staubpartikel, bevorzugt Black Carbon verwendet wird, und/oder
**dass** das Medium, das mit den Partikeln beladen ist, als Aerosol vorliegt.

8. Verfahren nach einem der vorherigen Ansprüche, **dadurch gekennzeichnet,**
**dass** das Filtermaterial kontinuierlich von einer Rolle entnommen wird oder
**dass** das Filtermaterial (114; 214) in einer Filterkassette (106; 206, 206', 206") bereitgestellt wird, wobei die Filterkassette (106; 206, 206', 206") bevorzugt einen Pfad (116, 134; 216) für die Führung des Mediums nach Anspruch 3 bereitstellt.

9. Verfahren nach einem der vorherigen Ansprüche, **dadurch gekennzeichnet, dass** als das Filtermaterial für die Konzentrationsmessung (124; 224) und als das Filtermaterial für die Referenzmessung (128; 228) dasselbe Filtermaterial (114; 214) verwendet wird, wobei für die Konzentrationsmessung (124; 224) und für die Referenzmessung (128; 228) bevorzugt unterschiedliche Bereiche eines Filtermaterialabschnitts (114; 214) verwendet werden, und/oder
**dass** das Filtermaterial (114; 214) nach Erreichen einer bestimmten Lichtabschwächung ausgetauscht wird, wobei die bestimmte Lichtabschwächung bevorzugt zumindest 80%, insbesondere zumindest 90% beträgt, und/oder
**dass** die Temperatur während der Messung geregelt wird und/oder
**dass** das Streulicht gemessen wird, um den Einfluss Licht streuender Partikel auf das Messergebnis zu reduzieren, wobei bevorzugt ein Streulichtdetektor (244) der Klasse PM10 und/oder ein Streulichtdetektor (244) der Klasse PM2.5 verwendet wird, und/oder
**dass** für die Messung mehrere unterschiedliche Anregungswellenlängen des Lichts bereitgestellt werden und/oder
**dass** für die Messung mehrere unterschiedliche Lichtdetektoren bereitgestellt werden und/oder
**dass** Partikel mit einer Dimension größer gleich einer vorbestimmten Dimension, bevorzugt einer Dimension größer gleich 10 µm, vorzugsweise größer gleich 2,5 µm außerhalb des Filtermaterials (114; 214) zumindest teilweise abgeschieden werden, wobei für die Abscheidung insbesondere ein Impaktor (120; 220) oder ein Zyklon verwendet werden.

10. Vorrichtung (100; 200) zur Messung der Konzentration von Licht absorbierenden Partikeln in einem mit Licht absorbierenden Partikeln beladenen Medium, wobei ein Filtermaterial (114; 214) besteht, wobei ein Lichtdetektor (110; 210) besteht, mit dem im Rahmen einer Konzentrationsmessung (124; 224) die Transmission von Licht durch Filtermaterial (114; 214), das mit Licht absorbierenden Partikeln beladenen wurde, gemessen werden kann, und wobei ein Lichtdetektor (110; 210) besteht, mit dem im Rahmen einer Referenzmessung (128; 228) die Transmission von Licht durch Filtermaterial (124; 224), das nicht mit Licht absorbierenden Partikeln beladen wurde, gemessen werden kann, wobei die Vorrichtung (100; 200) angepasst ist, die Konzentrationsmessung (124; 224) mit der Referenzmessung (128; 228) zu normieren, **dadurch gekennzeichnet, dass** die Vorrichtung einen Lichtdetektor (110; 210) aufweist, der eingerichtet ist, abwechselnd die Konzentrationsmessung (124; 224) und die Referenzmessung (128; 228) durchzuführen.

11. Vorrichtung (100; 200) nach Anspruch 10, **dadurch gekennzeichnet, dass** ein erster Medienführungsweg durch das zu beladene Filtermaterial (114; 214) für die Konzentrationsmessung (124; 224) und ein zweiter Medienführungsweg durch das nicht zu beladene Filtermaterial (114; 214) für die Referenzmessung (128; 228) ausgebildet ist, wobei die Medienführungswege so ausgebildet sind, dass das mit Licht absorbierenden Partikeln beladene Medium zuerst durch den ersten Medienführungsweg und anschließend durch den zweiten Medienführungsweg geführt wird, wobei ein Lichtwegeschalter (108; 208) für die Schaltung zwischen einem ersten Lichtweg (124; 224) von einer Lichtquelle (102; 202) durch mit Licht absorbierenden Partikeln beladenes Filtermaterial (114; 214) hin zu dem Lichtdetektor (110; 210) und einem zweiten Lichtweg (128; 228) von der Lichtquelle (102; 202) durch nicht mit Licht absorbierenden Partikeln beladenes Filtermaterial (114; 214) hin zu dem Lichtdetektor (110; 210) besteht.

12. Vorrichtung (100; 200) nach Anspruch 10 oder 11, **dadurch gekennzeichnet,**
**dass** die Vorrichtung (100; 200) angepasst ist, das Verfahren nach einem der Ansprüche 2 bis 9 durchzuführen, und/oder
**dass** ein Lichtwegeschalter (108; 208) für die Schaltung zwischen einem ersten Lichtweg (124; 224) von einer Lichtquelle (102; 202) durch mit Licht absorbierenden Partikeln beladenes Filtermaterial (114; 214) hin zum Lichtdetektor (110; 210) und einem zweiten Lichtweg (128; 228) von einer Lichtquelle (102; 202) durch nicht mit Licht absorbierenden Partikeln beladenes Filtermaterial (114; 214) hin zum Lichtdetektor (110; 210) besteht, wobei der Lichtwegeschalter bevorzugt ein mechanisches und/oder ein elektrooptisches Element aufweist, wobei das Element insbesondere eine Chopperscheibe (108; 208), eine Blende, ein Shutter, ein beweglicher Spiegel, ein beweglicher Polarisationsfilter oder ein elektrischer Polarisationsfilter ist.

13. Vorrichtung (100; 200) nach Anspruch 10 oder 12, **dadurch gekennzeichnet, dass** ein Filter (106; 206, 206', 206") mit dem zu beladenem Filtermaterial (114; 214) und dem nicht zu beladenem Filtermaterial (114; 214) besteht, wobei der Filter (106; 206, 206', 206") bevorzugt
- wechselbar ausgebildet ist und/oder
- als Filterkassette (106; 206, 206', 206") ausgebildet ist, wobei die Filterkassette (106; 206, 206', 206") bevorzugt steif ausgebildet ist, und/oder
- mit einem ersten Lichtweg (124; 224) für das zu beladene Filtermaterial (114; 214) für die Konzentrationsmessung und einem zweiten Lichtweg (128; 228) für das nicht zu beladene Filtermaterial (114; 214) für die Referenzmessung ausgebildet ist und/oder
- mit einem ersten Medienführungsweg für das zu beladene Filtermaterial (114; 214) für die Konzentrationsmessung (124; 224) und einem zweiten Medienführungsweg für das nicht zu beladene Filtermaterial (114; 214) für die Referenzmessung (128; 228) ausgebildet ist und/oder
- mit einem Vorfilter (120; 220) für die Licht absorbierenden Partikel ausgebildet ist, wobei der Vorfilter insbesondere als Prallplatte (120; 220) oder Zyklon ausgebildet ist.

14. Vorrichtung nach einem der Ansprüche 10 bis 13, **dadurch gekennzeichnet, dass** ein Filterhalter (246) besteht, der öffenbar ist, um den Filter (206, 206', 206") aufzunehmen, wobei der Filterhalter (246) bevorzugt
- ausgebildet ist, den Filter (206, 206', 206") zu klemmen, und/oder
- ein Licht durchlässiges optisches Element (215) aufweist, das im Zustand des Haltens des Filters (206, 206', 206") den Filter (206, 206', 206") zumindest bereichsweise mediendicht abschließt, wobei das optische Element (215) insbesondere einen Medienführungsweg (217) im Zusammenwirken mit dem Filter (206, 206', 206") definiert, und/oder
- einen Lichtdiffusor (204) aufweist, der insbesondere zumindest einen Medienführungsweg (234, 236) aufweist, und/oder
- ausgebildet ist, einen gebrauchten Filter (206, 206', 206") automatisch durch einen neuen Filter (206, 206', 206") zu ersetzen, wobei der neue Filter (206, 206', 206") insbesondere einem Magazin entnommen wird.

## Claims

1. Method for measuring the concentration of light-absorbing particles in a medium loaded with light-absorbing particles, wherein the transmission of light through filter material (114; 214) that has been loaded with light-absorbing particles is measured as part of a concentration measurement, wherein the transmission of light through filter material (114; 214) that has not been loaded with light-absorbing particles is measured as part of a reference measurement, wherein the concentration measurement is standardised with the reference measurement, **characterised in that** a light detector (110; 210) is used to measure the transmitted light, which light detector alternately performs the concentration measurement (124; 224) and the reference measurement (128; 228).

2. Method according to claim 1, **characterised in that** the medium loaded with light-absorbing particles is guided through the filter material (114; 214) to be loaded, wherein the medium is subsequently guided through filter material (114; 214) not to be loaded, wherein the same light source (102; 202) is used for the concentration measurement (124; 224) and the reference measurement (128; 228), wherein the light path (124, 128; 224, 228) between the light source (102; 202) and the light detector (110; 210) is alternately switched via the loaded filter material (114; 214) and the unloaded filter material (114; 214).

3. Method according to claim 1 or 2, **characterised in that** there is a light path switch (108; 208) for switching between a first light path (124; 224) from a light source (102; 202) through filter material (114; 214) loaded with light-absorbing particles to the light detector (110; 210) and a second light path (128; 228) from a light source (102; 202) through filter material (114; 214) not loaded with light-absorbing particles to the light detector (110; 210), wherein the light path switch of the light path (108; 208) preferably has a mechanical and/or electro-optical element, wherein the element is in particular a chopper disc (108; 208), an aperture, a shutter, a movable mirror, a movable polarisation filter or an electric polarisation filter.

4. Method according to any one of the preceding claims, **characterised in that** there is a filter (106; 206, 206', 206") with the filter material (114; 214) to be loaded and the filter material (114; 214) not to be loaded, wherein the filter (106; 206, 206', 206") is preferably
- designed to be replaceable and/or
- designed as a filter cassette (106; 206, 206', 206"), wherein the filter cassette (106; 206, 206', 206") is preferably rigid, and/or
- designed with a first light path (124; 224) for the filter material (114; 214) to be loaded for the concentration measurement and a second light path (128; 228) for the filter material (114; 214) not to be loaded for the reference measurement and/or
- designed with a media guiding path for the filter material (114; 214) to be loaded for the concentration measurement (124; 224) and a second media guiding path for the filter material (114; 214) not to be loaded for the reference measurement (128; 228) and/or
- designed with a pre-filter (120; 220) for the light-absorbing particles, wherein the pre-filter is in particular designed as a baffle plate (120; 220) or cyclone.

5. Method according to any one of the preceding claims, **characterised in that** the same light source (102; 202) is used for the concentration measurement (124; 224) and the reference measurement (128; 228), wherein preferably it is provided that the light path (124, 128; 224, 228) between the light source (102; 202) and the light detector (110; 210) is alternately switched via the loaded filter material (114; 214) and the unloaded filter material (114; 214).

6. Method according to any one of the preceding claims, **characterised in that** the medium, which is loaded with the particles, is guided through the filter material (114; 214) to be loaded, wherein it is preferably provided that the medium is subsequently guided through the filter material (114; 214) not to be loaded, wherein in particular it is provided that the medium is subjected to pre-filtering (120; 220) before it is guided through the filter material (114; 214) to be loaded.

7. Method according to any one of the preceding claims, **characterised**
**in that** the light is diffused (104; 204) in front of the filter material (114; 214) and/or
**in that** air is used as the medium and/or
**in that** dust particles, preferably black carbon, are used as particles and/or
**in that** the medium loaded with the particles is present as an aerosol.

8. Method according to any one of the preceding claims, **characterised**
**in that** the filter material is continuously removed from a roll or
**in that** the filter material (114; 214) is provided in a filter cassette (106; 206, 206', 206"), wherein the filter cassette (106; 206, 206', 206") preferably provides a path (116, 134; 216) for guiding the medium according to claim 3.

9. Method according to any one of the preceding claims, **characterised in that** the same filter material (114; 214) is used as the filter material for the concentration measurement (124; 224) and as the filter material for the reference measurement (128; 228), wherein different areas of a filter material section (114; 214) are preferably used for the concentration measurement (124; 224) and for the reference measurement (128; 228), and/or
**in that** the filter material (114; 214) is replaced after reaching a certain light attenuation, wherein the certain light attenuation is preferably at least 80%, in particular at least 90%, and/or
**in that** the temperature is controlled during the measurement, and/or
**in that** the scattered light is measured in order to reduce the influence of light-scattering particles on the measurement result, wherein a scattered light detector (244) of class PM10 and/or a scattered light detector (244) of class PM2.5 is preferably used, and/or
**in that** a plurality of different excitation wavelengths of light are provided for the measurement, and/or
**in that** a plurality of different light detectors are provided for the measurement, and/or
**in that** particles having a dimension greater than or equal to a predetermined dimension, preferably a dimension greater than or equal to 10 µm, preferably greater than or equal to 2.5 µm are at least partially separated outside the filter material (114; 214), wherein in particular an impactor (120; 220) or a cyclone is used for the separation.

10. Device (100; 200) for measuring the concentration of light-absorbing particles in a medium loaded with light-absorbing particles, wherein there is a filter material (114; 214), wherein a there is a light detector (110; 210) with which the transmission of light through filter material (114; 214) that has been loaded with light-absorbing particles can be measured as part of a concentration measurement (124; 224), and wherein there is a light detector (110; 210), with which the transmission of light through filter material (124; 224) that has not been loaded with light-absorbing particles can be measured as part of a reference measurement (128; 22), wherein the device (100; 200) is adapted to standardise the concentration measurement (124; 224) with the reference measurement (128; 228), **characterised in that** the device has a light detector (110; 210) that is configured to alternately perform the concentration measurement (124; 224) and the reference measurement (128; 228).

11. Device (100; 200) according to claim 10, **characterised in that** a first media guiding path is formed through the filter material (114; 214) to be loaded for the concentration measurement (124; 224) and a second media guiding path is formed through the filter material (114; 214) not to be loaded for the reference measurement (128; 228), wherein the media guiding paths are designed such that the medium loaded with light-absorbing particles is first guided through the first media guiding path and then through the second media guiding path, wherein there is a light path switch (108; 208) for switching between a first light path (124; 224) from a light source (102; 202) through filter material (114; 214) loaded with light-absorbing particles to the light detector (110; 210) and a second light path (128; 228) from the light source (102; 202) through filter material (114; 214) not loaded with light-absorbing particles to the light detector (110; 210).

12. Device (100; 200) according to claim 10 or 11, **characterised**
**in that** the device (100; 200) is adapted to perform the method according to any one of claims 2 to 9, and/or
**in that** there is a light path switch (108; 208) for switching between a first light path (124; 224) from a light source (102; 202) through filter material (114; 214) loaded with light-absorbing particles to the light detector (110; 210) and a second light path (128; 228) from a light source (102; 202) through filter material (114; 214) not loaded with light-absorbing particles to the light detector (110; 210), wherein the light path switch preferably has a mechanical and/or electro-optical element, wherein the element is in particular a chopper disc (108; 208), an aperture, a shutter, a movable mirror, a movable polarisation filter or an electric polarisation filter.

13. Device (100; 200) according to claim 10 or 12, **characterised in that** there is a filter (106; 206, 206', 206") with the filter material (114; 214) to be loaded and the filter material (114; 214) not to be loaded, wherein the filter (106; 206, 206', 206") is preferably
- designed to be replaceable and/or
- designed as a filter cassette (106; 206, 206', 206"), wherein the filter cassette (106; 206, 206', 206") is preferably rigid, and/or
- designed with a first light path (124; 224) for the filter material (114; 214) to be loaded for the concentration measurement and a second light path (128; 228) for the filter material (114; 214) not to be loaded for the reference measurement and/or
- designed with a media guiding path for the filter material (114; 214) to be loaded for the concentration measurement (124; 224) and a second media guiding path for the filter material (114; 214) not to be loaded for the reference measurement (128; 228) and/or
- designed with a pre-filter (120; 220) for the light-absorbing particles, wherein the pre-filter is in particular designed as a baffle plate (120; 220) or cyclone.

14. Device according to any one of claims 10 to 13, **characterised in that** there is a filter holder (246) that can be opened in order to receive the filter (206, 206', 206'), wherein the filter holder (246) preferably
- is designed to clamp the filter (206, 206', 206") and/or
- has a light-transmitting optical element (215) that, in the state in which the filter (206, 206', 206') is held, closes off the filter (206, 206', 206') in a media-tight manner at least in certain regions, wherein the optical element (215) in particular defines a media guide path (217) in co-operation with the filter (206, 206', 206'), and/or
- has a light diffuser (204), which in particular has at least one media guiding path (234, 236), and/or
- is designed to automatically replace a used filter (206, 206', 206') with a new filter (206, 206', 206'), wherein the new filter (206, 206', 206') is taken from a magazine in particular.

## Revendications

1. Procédé de mesure de la concentration de particules absorbant la lumière dans un milieu chargé en particules absorbant la lumière, dans lequel, dans le cadre d'une mesure de concentration, la transmission de lumière à travers un matériau filtrant (114 ; 214), qui a été chargé en particules absorbant la lumière, est mesurée, dans lequel, dans le cadre d'une mesure de référence, la transmission de lumière à travers un matériau filtrant (114 ; 214), qui n'a pas été chargé en particules absorbant la lumière, est mesurée, dans lequel la mesure de concentration est normalisée avec la mesure de référence, **caractérisé en ce qu'est** utilisé, pour la mesure de la lumière transmise, un détecteur de lumière (110 ; 210), qui effectue en alternance la mesure de concentration (124 ; 224) et la mesure de référence (128 ; 228).

2. Procédé selon la revendication 1, **caractérisé en ce que** le milieu, qui est chargé en particules absorbant la lumière, est guidé à travers le matériau filtrant (114 ; 214) destiné à être chargé, dans lequel le milieu est guidé par la suite à travers le matériau filtrant (114 ; 214) qui n'est pas à charger, dans lequel la même source de lumière (102 ; 202) est utilisée pour la mesure de concentration (124 ; 224) et la mesure de référence (128 ; 228), dans lequel le chemin de lumière (124, 128 ; 224, 228) entre la source de lumière (102 ; 202) et le détecteur de lumière (110 ; 210) est commuté en alternance par l'intermédiaire du matériau filtrant (114 ; 214) chargé et du matériau filtrant (114 ; 214) non chargé.

3. Procédé selon la revendication 1 ou 2, **caractérisé en ce qu'**un commutateur de chemin de lumière (108 ; 208) est présent pour la commutation entre un premier chemin de lumière (124 ; 224) d'une source de lumière (102 ; 202) à travers un matériau filtrant (114 ; 214) chargé en particules absorbant la lumière en direction du détecteur de lumière (110 ; 210) et un deuxième chemin de lumière (128 ; 228) d'une source de lumière (102 ; 202) à travers un matériau filtrant (114 ; 214) non chargé en particules absorbant la lumière en direction du détecteur de lumière (110 ; 210), dans lequel le commutateur de chemin de lumière du chemin de lumière (108 ; 208) présente de manière préférée un élément mécanique et/ou électro-optique, dans lequel l'élément est en particulier un disque hacheur (108 ; 208), un diaphragme, un obturateur, un miroir mobile, un filtre de polarisation mobile ou un filtre de polarisation électrique.

4. Procédé selon l'une quelconque des revendications précédentes, **caractérisé en ce qu'**un filtre (106 ; 206, 206', 206") est présent avec le matériau filtrant (114 ; 214) destiné à être chargé et le matériau filtrant (114 ; 214) qui n'est pas à charger, dans lequel le filtre (106 ; 206, 206', 206") de manière préférée
- est réalisé de manière interchangeable et/ou
- est réalisé en tant que cassette filtrante (106 ; 206, 206', 206"), dans lequel la cassette filtrante (106 ; 206, 206', 206") est réalisée de manière préférée de manière rigide, et/ou
- est réalisé avec un premier chemin de lumière (124 ; 224) pour le matériau filtrant (114 ; 214) destiné à être chargé pour la mesure de concentration et avec un deuxième chemin de lumière (128 ; 228) pour le matériau filtrant (114 ; 214) qui n'est pas à charger pour la mesure de référence, et/ou
- est réalisé avec un premier chemin de guidage de milieu pour le matériau filtrant (114 ; 214) destiné à être chargé pour la mesure de concentration (124 ; 224) et avec un deuxième chemin de guidage de milieu pour le matériau filtrant (114 ; 214) qui n'est pas à charger pour la mesure de référence (128 ; 228) et/ou
- est réalisé avec un préfiltre (120 ; 220) pour les particules absorbant la lumière, dans lequel le préfiltre est réalisé en particulier en tant que plaque déflectrice (120 ; 220) ou en tant qu'un cyclone.

5. Procédé selon l'une quelconque des revendications précédentes, **caractérisé en ce que** pour la mesure de concentration (124 ; 224) et la mesure de référence (128 ; 228), la même source de lumière (102 ; 202) est utilisée, dans lequel il est prévu de manière préférée que le chemin de lumière (124, 128 ; 224, 228) entre la source de lumière (102 ; 202) et le détecteur de lumière (110 ; 210) est commuté en alternance par l'intermédiaire du matériau filtrant (114 ; 214) chargé et du matériau filtrant (114 ; 214) non chargé.

6. Procédé selon l'une quelconque des revendications précédentes, **caractérisé en ce que** le milieu, qui est chargé en particules, est guidé à travers le matériau filtrant (114 ; 214) destiné à être chargé, dans lequel il est prévu de manière préférée que le milieu est guidé par la suite à travers le matériau filtrant (114 ; 214) qui n'est pas à charger, dans lequel il est prévu en particulier que le milieu est soumis à un préfiltrage (120 ; 220) avant qu'il ne soit guidé à travers le matériau filtrant (114 ; 214) destiné à être chargé.

7. Procédé selon l'une quelconque des revendications précédentes, **caractérisé**
**en ce que** la lumière devant le matériau filtrant (114 ; 214) est rendue diffuse (104 ; 204) et/ou
que de l'air est utilisé en tant que milieu et/ou
que sont utilisées en tant que particules des particules de poussière, de manière préférée du noir de carbone, et/ou
que le milieu, qui est chargé en particules, est présent sous forme d'aérosol.

8. Procédé selon l'une quelconque des revendications précédentes, **caractérisé en ce que** le matériau filtrant est prélevé en continu d'un rouleau, ou
que le matériau filtrant (114 ; 214) est fourni dans une cassette filtrante (106 ; 206, 206', 206"), dans lequel la cassette filtrante (106 ; 206, 206', 206") fournit de manière préférée un trajet (116, 134 ; 216) pour le guidage du milieu selon la revendication 3.

9. Procédé selon l'une des revendications précédentes, **caractérisé en**
**que** le même matériau filtrant (114 ; 214) est utilisé comme matériau filtrant pour la mesure de concentration (124 ; 224) et comme matériau filtrant pour la mesure de référence (128 ; 228), dans lequel différentes zones d'une section de matériau filtrant (114 ; 214) sont de manière préférée utilisées pour la mesure de concentration (124 ; 224) et pour la mesure de référence (128 ; 228), et/ou
**que** le matériau filtrant (114 ; 214) est remplacé après avoir atteint une certaine atténuation de lumière, dans lequel l'atténuation de lumière donnée est de manière préférée d'au moins 80 %, en particulier d'au moins 90 %, et/ou
**que** la température est régulée pendant la mesure et/ou
**que** la lumière diffusée est mesurée pour réduire l'influence des particules diffusant la lumière sur le résultat de la mesure, dans lequel de manière préférée sont utilisés un détecteur de lumière diffusée (244) de classe PM10 et/ou un détecteur de lumière diffusée (244) de classe PM2,5, et/ou
**que** plusieurs longueurs d'onde d'excitation différentes de la lumière sont fournies pour la mesure et/ou
**que** plusieurs détecteurs de lumière différents sont fournis pour la mesure et/ou
**que** des particules avec une dimension supérieure ou égale à une dimension prédéfinie, de manière préférée avec une dimension supérieure ou égale à 10 µm, de préférence supérieure ou égale à 2,5 µm, sont séparées au moins en partie à l'extérieur du matériau filtrant (114 ; 214), dans lequel en particulier un impacteur (120 ; 220) ou un cyclone sont utilisés pour la séparation.

10. Dispositif (100 ; 200) de mesure de la concentration de particules absorbant la lumière dans un milieu chargé en particules absorbant la lumière, dans lequel un matériau filtrant (114 ; 214) est présent, dans lequel un détecteur de lumière (110 ; 210) est présent, avec lequel, dans le cadre d'une mesure de concentration (124 ; 224), la transmission de lumière à travers le matériau filtrant (114 ; 214), qui a été chargé en particules absorbant la lumière, peut être mesurée, et dans lequel un détecteur de lumière (110 ; 210) est présent, avec lequel, dans le cadre d'une mesure de référence (128 ; 228), la transmission de lumière à travers le matériau filtrant (124 ; 224), qui n'a pas été chargé en particules absorbant la lumière, peut être mesurée, dans lequel le dispositif (100 ; 200) est adapté pour normaliser la mesure de concentration (124 ; 224) avec la mesure de référence (128 ; 228), **caractérisé en ce que** le dispositif présente un détecteur de lumière (110 ; 210) qui est mis au point pour effectuer en alternance la mesure de concentration (124 ; 224) et la mesure de référence (128 ; 228).

11. Dispositif (100 ; 200) selon la revendication 10, **caractérisé en ce que** un premier chemin de guidage de milieu à travers le matériau filtrant (114 ; 214) destiné à être chargé est réalisé pour la mesure de concentration (124 ; 224) et un deuxième chemin de guidage de milieu à travers le matériau filtrant (114 ; 214) qui n'est pas à charger est réalisé pour la mesure de référence (128 ; 228), dans lequel les chemins de guidage du milieu sont réalisés de telle sorte que le milieu chargé en particules absorbant la lumière est d'abord guidé à travers le premier chemin de guidage du milieu, puis à travers le deuxième chemin de guidage du milieu, dans lequel un commutateur de chemin de lumière (108 ; 208) est présent pour la commutation entre un premier chemin de lumière (124 ; 224) depuis une source de lumière (102 ; 202) à travers le matériau filtrant (114 ; 214) chargé en particules absorbant la lumière en direction du détecteur de lumière (110 ; 210) et un deuxième chemin de lumière (128 ; 228) depuis la source de lumière (102 ; 202) à travers le matériau filtrant (114 ; 214) chargé en particules n'absorbant pas la lumière en direction du détecteur de lumière (110 ; 210).

12. Dispositif (100 ; 200) selon la revendication 10 ou 11, **caractérisé en ce**
**que** le dispositif (100 ; 200) est adapté pour mettre en œuvre le procédé selon l'une quelconque des revendications 2 à 9, et/ou
**qu**'un commutateur de chemin de lumière (108 ; 208) est présent pour la commutation entre un premier chemin de lumière (124 ; 224) depuis une source de lumière (102 ; 202) à travers un matériau filtrant (114 ; 214) chargé en particules absorbant la lumière en direction du détecteur de lumière (110 ; 210) et un deuxième chemin de lumière (128 ; 228) depuis une source de lumière (102 ; 202) à travers un matériau filtrant (114 ; 214) non chargé en particules absorbant la lumière en direction du détecteur de lumière (110 ; 210), dans lequel le commutateur de chemin de lumière présente de manière préférée un élément mécanique et/ou électro-optique, dans lequel l'élément est en particulier un disque hacheur (108 ; 208), un diaphragme, un obturateur, un miroir mobile, un filtre de polarisation mobile ou un filtre de polarisation électrique.

13. Dispositif (100 ; 200) selon la revendication 10 ou 12, **caractérisé en ce qu'**un filtre (106 ; 206, 206', 206") avec le matériau filtrant (114 ; 214) destiné à être chargé et le matériau filtrant (114 ; 214) qui n'est pas à charger est présent, dans lequel le filtre (106 ; 206, 206', 206") de manière préférée
- est réalisé de manière interchangeable et/ou
- est réalisé comme une cassette filtrante (106 ; 206, 206', 206"), dans lequel la cassette filtrante (106 ; 206, 206', 206") est réalisée de manière préférée de manière rigide, et/ou
- est réalisé avec un premier chemin de lumière (124 ; 224) pour le matériau filtrant (114 ; 214) destiné à être chargé pour la mesure de concentration et avec un deuxième chemin de lumière (128 ; 228) pour le matériau filtrant (114 ; 214) qui n'est pas à charger pour la mesure de référence et/ou
- est réalisé avec un premier chemin de guidage de milieu pour le matériau filtrant (114 ; 214) destiné à être chargé pour la mesure de concentration (124 ; 224) et avec un deuxième chemin de guidage de milieu pour le matériau filtrant (114 ; 214) qui n'est pas à charger pour la mesure de référence (128 ; 228) et/ou
- est réalisé avec un préfiltre (120 ; 220) pour les particules absorbant la lumière, dans lequel le préfiltre est réalisé en particulier en tant qu'une plaque déflectrice (120 ; 220) ou un cyclone.

14. Dispositif selon l'une quelconque des revendications 10 à 13, **caractérisé en ce qu'**un porte-filtre (246) est présent, qui peut être ouvert pour recevoir le filtre (206, 206', 206"), dans lequel le porte-filtre (246) de manière préférée
- est réalisé pour serrer le filtre (206, 206', 206"), et/ou
- présente un élément optique perméable à la lumière (215) qui, lorsqu'il maintient le filtre (206, 206', 206"), assure l'étanchéité du filtre (206, 206', 206") au moins par endroits, dans lequel l'élément optique (215) définit en particulier un chemin de guidage de milieu (217) en coopération avec le filtre (206, 206', 206"), et/ou
- présente un diffuseur de lumière (204) qui présente en particulier au moins un chemin de guidage de milieu (234, 236), et/ou
- est réalisé pour remplacer un filtre usagé (206, 206', 206") automatiquement par un nouveau filtre (206, 206', 206"), dans lequel le nouveau filtre (206, 206', 206") est en particulier prélevé d'un magasin.
